# FASCICULE DE BREVET EUROPEEN

(11) **EP 4 072 817 B1**
(45) Date de publication et mention de la délivrance du brevet: **02.10.2024**
(21) Numéro de dépôt: 20829327.4
(22) Date de dépôt: 03.12.2020
(51) Int. Cl.: B29C 33/70, B29D 30/06

(54) **DISPOSITIF POUR DETACHER DES PARTICULES D'ELASTOMERES**
VORRICHTUNG ZUM ENTFERNEN VON ELASTOMERPARTIKELN
DEVICE FOR REMOVING ELASTOMER PARTICLES

(30) Priorité: 11.12.2019 FR 1914130
(43) Date de publication de la demande: 19.10.2022
(73) Titulaire: COMPAGNIE GENERALE DES ETABLISSEMENTS MICHELIN, 63040 Clermont-Ferrand (FR)
(72) Inventeur: DETTORRE, Jean-Marie, 63040 CLERMONT-FERRAND CEDEX 9 (FR); DRAGO, Frédéric, 63040 CLERMONT-FERRAND CEDEX 9 (FR); DRUET, Michel, 63040 CLERMONT-FERRAND CEDEX 9 (FR); PIQ, Cyril, 63040 CLERMONT-FERRAND CEDEX 9 (FR); SILVA, Lionel, 63040 CLERMONT-FERRAND CEDEX 9 (FR)
(74) Mandataire: M.F.P. Michelin
(86) Numéro de dépôt international: PCT/FR2020/052262
(87) Numéro de publication internationale: WO 2021/116569

(56) Documents cités:
- WO-A1-2010/094454
- US-A1- 2017 136 720

## Description

L'invention concerne un dispositif destiné à détacher des particules d'élastomère qui adhèrent sur la surface des microsoupapes disposées sur la surface interne des moules de cuisson de pneumatique.

Dans la demande KR20180068645 A, il est connu un dispositif vibrant portatif de nettoyage générant des ultrasons.

Malheureusement un tel dispositif ne permet pas de connaître la limite de nettoyage des microsoupapes, limite pouvant risquer l'endommagement desdites microsoupapes.

Par ailleurs, le document WO 2010/094454A1 décrit un procédé de nettoyage de moule de cuisson de pneumatique. Ce procédé utilise un stylo à ultra-sons, deux chambres successives de nettoyage et un bain de rinçage.

Enfin, le document US 2017/136720A1 décrit un dispositif de nettoyage de surface de moule comprenant simplement une caméra de détection de surface et un laser qui irradie la surface.

Les documents WO2010/094454 A1 et US 2017/136720 montrent également des dispositifs permettant de détacher des particules élastomères, mais ces dispositifs présentent de nombreux inconvénients, notamment en termes d'efficacité.

Aussi il subsiste le besoin de disposer d'un dispositif qui permet le nettoyage des microsoupapes par la détection ciblée des zones intérieures de moules de cuisson de pneumatique, en un nombre limité d'étapes, de manière à effectuer un nettoyage ciblé et non intrusif.

L'invention a donc pour objet un dispositif destiné à détacher des particules d'élastomère qui adhèrent sur des microsoupapes disposées sur la surface interne d'un moule de cuisson de pneumatique de véhicule comprenant au moins un moyen de détection.

Cette installation se caractérise en ce qu'elle comprend au moins un moyen de détection du changement de fréquence indiquant la fin du nettoyage de la microsoupape, ledit moyen de détection étant un accéléromètre.

Le dispositif selon l'invention présente l'avantage d'être de réalisation simple notamment par un faible nombre d'éléments constitutifs, et de pouvoir être automatisé afin de gagner en confort et en rapidité de travail.

De préférence, le moyen de détection de microsoupapes est une caméra.

De préférence, le moyen de détection du changement de fréquence peut être un microphone.

De préférence, le moyen de détection de microsoupapes est connecté à un ordinateur équipé d'un algorithme de gestion de données.

L'invention va être décrite à l'aide des figures suivantes, schématiques et non nécessairement à l'échelle, et dans lesquelles :
- La figure 1 représente une vue schématique d'ensemble du dispositif de nettoyage de l'intérieur d'un moule de cuisson de pneumatique, et
- La figure 2 représente une vue schématique du dispositif selon l'invention.

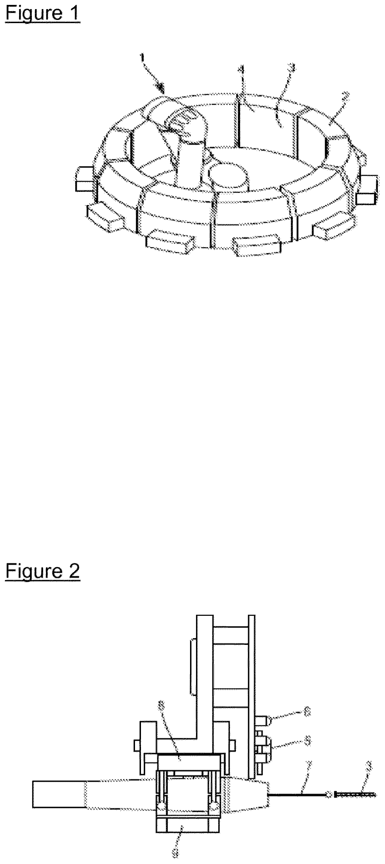

Comme le montre la figure 1, le dispositif de nettoyage, de référence générale 1, est disposé à l'intérieur d'un moule 2 de cuisson de pneumatique. Le moule 2 comprend une multitude de microsoupapes 3 disposées sur toute sa surface interne 4.

Comme le montre de manière plus détaillée la figure 2, le dispositif comprend une caméra 5 destinée à détecter chaque microsoupape 3. La caméra 5 est reliée à un algorithme de type « Hough Circle Transform » par le biais d'un ordinateur (non représenté). Cet algorithme permet d'effectuer un relevé complet de la surface interne 4 du moule 2. La caméra 5 est éclairée de lampe 6, par exemple de type LED. Le dispositif comprend en outre un stylo à ultrasons 7, monté sur un rail 8, destiné à approcher progressivement le stylo au contact d'une microsoupape, et un accéléromètre 9 destiné à détecter le changement de fréquence indiquant la fin du nettoyage de la microsoupape. A la place de l'accéléromètre, on peut disposer un microphone qui servira à relever les changements de fréquence des vibrations, par des bruits.

Le dispositif selon l'invention fonctionne de la façon suivante. La caméra 5 détecte une microsoupape 3 à l'aide de la gestion par l'algorithme qui effectue un relevé complet de la surface interne 4 du moule 2. Après avoir repéré une microsoupape 3, le stylo à ultrasons 7, monté sur rail, est approché par incréments jusqu'à ce qu'il touche la surface de la microsoupape 3. Dès son toucher, le stylo commence à vibrer. Les vibrations sont destinées à enlever les particules d'élastomère qui adhèrent sur les microsoupapes 3. L'amplitude des vibrations est d'environ 0.1mm avec une fréquence d'environ 25.000Hz. L'accéléromètre mesure l'amplitude et la fréquence des vibrations.

Une fois la particule détachée, une augmentation brutale de l'amplitude des vibrations est détectée par l'algorithme jusqu'à environ 6.000Hz. Cette brutale augmentation informe de la fin du processus de nettoyage de la microsoupape. Pour ne pas endommager la microsoupape et gagner en temps de cycle de nettoyage, les vibrations sont alors stoppées lorsque la particule se détache.

Selon une variante de l'invention, la présence d'un microphone près de la pointe du stylo 7, et un traitement mathématique du signal par une transformée de Fourrier permettent de mettre en évidence les différents états d'adhérence et de détachement des particules sur la microsoupape.

## Revendications

1. Dispositif destiné à détacher des particules d'élastomère qui adhèrent sur des microsoupapes (3) disposées sur la surface interne d'un moule (2) de cuisson de pneumatique de véhicule comprenant au moins un moyen de détection (5) de microsoupapes (3), au moins un stylo (7) émettant des ultrasons, **caractérisé en ce qu'il** comprend au moins un moyen de détection (9) du changement de fréquence indiquant la fin du nettoyage de la microsoupape (3), ledit moyen de détection (9) étant un accéléromètre.

2. Dispositif selon la revendication 1, dans lequel le moyen de détection (5) de microsoupape (3) est une caméra.

3. Dispositif selon la revendication 1, dans lequel le moyen de détection (9) du changement de fréquence est un microphone.

4. Dispositif selon l'une des revendications précédentes, dans lequel le moyen de détection (5) de microsoupape (3) est connecté à un ordinateur équipé d'un algorithme de gestion de données.

## Patentansprüche

1. Vorrichtung, die dazu bestimmt ist, Elastomerpartikel zu lösen, die auf Mikroventilen (3) haften, die auf der Innenoberfläche einer Fahrzeugreifenvulkanisationsform (2) angeordnet sind, umfassend mindestens ein Detektionsmittel (5) zur Detektion von Mikroventilen (3), mindestens einen Stift (7), der Ultraschall aussendet, **dadurch gekennzeichnet, dass** sie mindestens ein Detektionsmittel (9) zur Detektion der Frequenzänderung umfasst, die das Ende der Reinigung des Mikroventils (3) anzeigt, wobei das Detektionsmittel (9) ein Beschleunigungsmesser ist.

2. Vorrichtung nach Anspruch 1, wobei das Detektionsmittel (5) zur Detektion von Mikroventilen (3) eine Kamera ist.

3. Vorrichtung nach Anspruch 1, wobei das Detektionsmittel (9) zur Detektion der Frequenzänderung ein Mikrofon ist.

4. Vorrichtung nach einem der vorhergehenden Ansprüche, wobei das Detektionsmittel (5) zur Detektion von Mikroventilen (3) mit einem Computer verbunden ist, der mit einem Datenverwaltungsalgorithmus ausgestattet ist.

## Claims

1. Device intended for detaching elastomer particles adhering to microvalves (3) arranged on the internal surface of a vehicle tyre curing mould (2) comprising at least one microvalve detection means (5) for detecting microvalves (3), at least one ultrasound-emitting pen (7), **characterized in that** it comprises at least one frequency-change detection means (9) detecting a change in frequency indicating the end of the cleaning of the microvalve (3), said detection means (9) being an accelerometer.

2. Device according to Claim 1, wherein the microvalve detection means (5) for detecting microvalves (3) is a camera.

3. Device according to Claim 1, wherein the frequency-change detection means (9) is a microphone.

4. Device according to one of the preceding claims, wherein the microvalve detection means (5) for detecting microvalves (3) is connected to a computer equipped with a data management algorithm.
